# EUROPÄISCHE PATENTANMELDUNG

(11) **EP 2 213 349 A2**
(43) Veröffentlichungstag der Anmeldung: **04.08.2010**
(21) Anmeldenummer: 09014761.2
(22) Anmeldetag: 26.11.2009
(51) Int. Cl.: A63H 19/36, A63H 33/42, G09B 25/08

(54) **Verfahren und Vorrichtung zum Herstellen einer künstlichen Bepflanzungseinheit für eine Modelllandschaft**

(30) Priorität: 28.01.2009 DE 102009006376
(71) Anmelder: NOCH GmbH & Co. KG, 88239 Wangen im Allgäu (DE)
(72) Erfinder: Noch, Rainer, Dr., 88239 Wangen im Allgäu (DE)
(74) Vertreter: Zinnecker, Armin

(57) **Zusammenfassung**

Ein Verfahren dient zum Herstellen einer künstlichen Bepflanzungseinheit (9) für eine Modelllandschaft. Um ein derartiges Verfahren zu verbessern werden Kunstgrasfasern auf verschiedene Bereiche (10.1, 10.2, 10.3) einer Klebeschicht (1) aufgebracht (Fig. 4).

## Beschreibung

Die Erfindung betrifft eine künstliche Bepflanzungseinheit für eine Modelllandschaft und ein Verfahren zu deren Herstellung. Die künstliche Bepflanzungseinheit soll insbesondere eine Grasfläche wiedergeben.

Es sind bereits Verfahren zur Begrasung von Modelllandschaften bekannt. Bei einem vorbekannten Verfahren werden künstliche Grasfasern gleichmäßig über eine Fläche verteilt. Auf diese Weise können gleichförmige Grasflächen wiedergegeben werden. Die Erzeugung eines dem natürlichen Vorbild entsprechenden Eindrucks ist damit allerdings nicht möglich.

Ferner ist es bekannt, künstliche Grasflächen herzustellen, die aus mehreren Schichten von künstlichen Grasfasern bestehen. Auch dadurch kann jedoch kein dem natürlichen Vorbild entsprechender Eindruck erzeugt werden.

Aufgabe der Erfindung ist es, eine verbesserte künstliche Bepflanzungseinheit für eine Modelllandschaft und ein Verfahren zu deren Herstellung vorzuschlagen.

Erfindungsgemäß wird diese Aufgabe durch die Merkmale der Ansprüche 1 und 8 gelöst. Das erfindungsgemäße Verfahren zum Herstellen einer künstlichen Bepflanzungseinheit für eine Modelliandschaft ist **dadurch gekennzeichnet, daß** Kunstgrasfasern auf verschiedene Bereiche einer Klebeschicht aufgebracht werden. Bei den Modelllandschaften kann es sich insbesondere um Dioramen, Modellbahnanlagen oder Architekturmodelle handeln. Dadurch, daß Kunstgrasfasern auf verschiedene Bereiche einer Klebeschicht aufgebracht werden, kann ein dem natürlichen Vorbild besser entsprechender Eindruck erzeugt werden.

Vorteilhafte Weiterbildungen sind in den Unteransprüchen beschrieben.

Vorteilhaft ist es, wenn auf weitere Bereiche der Klebeschicht weitere Kunstgrasfasern aufgebracht werden. Die weiteren Bereiche können von den ursprünglichen Bereichen verschieden sein. Es ist allerdings auch möglich, daß sich die weiteren Bereiche mit den ursprünglichen Bereichen ganz oder teilweise überlappen. Die weiteren Kunstgrasfasern können sich von den zunächst verwendeten Kunstgrasfasern unterscheiden. Sie können insbesondere eine größere oder geringere Länge aufweisen und/oder eine andere Farbe aufweisen.

Das Aufbringen der weiteren Kunstgrasfasern auf weitere Bereiche der Klebeschicht kann noch zusätzlich wiederholt werden. Es ist also möglich, mehrmals auf jeweils bestimmte Bereiche der Klebeschicht weitere mehr oder weniger abweichende Kunstgrasfasern aufzubringen.

Vorteilhaft ist es, wenn die Kunstgrasfasern mittels einer oder mehreren Schablonen auf die verschiedenen Bereiche der Klebeschicht aufgebracht werden.

Eine weitere vorteilhafte Weiterbildung ist **dadurch gekennzeichnet, daß** die Kunstgrasfasern an ihren Spitzen mit Flockmaterial beflockt werden. Dies kann bereichsweise geschehen. Durch das Flockmaterial an den Spitzen der Kunstgrasfasern können insbesondere Wiesenblumen, Wiesenstauden, Gartenstauden, Blumenrabatten, Bodendecker und ähnliches nachgebildet werden.

Vorteilhaft ist es, wenn die Kunstgrasfasern und/oder das Flockmaterial elektrostatisch aufgebracht werden. Bei dem Verfahren der elektrostatischen Beflockung werden die Kunstgrasfasern und/oder das Flockmaterial vor dem Aufbringen mittels Hochspannung elektrostatisch aufgeladen. Sie haften nach dem Auftragen aufrecht auf der zu beflockenden Oberfläche.

Die Kunstgrasfasern können in Form von Büscheln, Streifen, Flächen und/oder Punkten auf die Klebeschicht aufgebracht werden.

Nach einer weiteren vorteilhaften Weiterbildung wird die aus der Klebeschicht und den damit verbundenen Kunstgrasfasern bestehende Einheit von der Unterlage abgelöst. Vorteilhaft ist es, wenn die ausgehärtete Klebeschicht die Trägerschicht für die Bepflanzungseinheit bildet. Die aus der Klebeschicht und den Kunstgrasfasern bestehende Einheit kann auf der Modelllandschaft positioniert und erforderlichenfalls dort befestigt werden, vorzugsweise durch eine Verklebung.

Die erfindungsgemäße künstliche Bepflanzungseinheit für eine Modelllandschaft umfaßt eine Trägerschicht und darauf aufgebrachte Kunstgrasfasern, wobei verschiedene Kunstgrasfasern auf verschiedene Bereiche der Trägerschicht aufgebracht sind. Die künstliche Bepflanzungseinheit ist vorzugsweise nach einem erfindungsgemäßen Verfahren hergestellt.

Die Spitzen der Kunstgrasfasern können mit Flockmaterial beflockt sein. Vorzugsweise sind die Spitzen der Kunstgrasfasern bereichsweise mit Flockmaterial beflockt.

Vorteilhaft ist es, wenn die Kunstgrasfasern und/oder das Flockmaterial durch elektrostatische Beflockung aufgebracht sind.

Nach einer weiteren vorteilhaften Weiterbildung sind die Kunstgrasfasern in Form von Büscheln, Streifen, Flächen und/oder Punkten auf die Trägerschicht aufgebracht.

Vorteilhaft ist es, wenn die Trägerschicht eine Klebeschicht aufweist oder aus einer Klebeschicht besteht.

Ein Ausführungsbeispiel der Erfindung wird nachstehend anhand der beigefügten Zeichnung im einzelnen erläutert. In der Zeichnung zeigt
- Fig. 1: eine Grundfläche, die mit Klebstoff bestrichen wird,
- Fig. 2: die Grundfläche gemäß Fig. 1, eine Schablone und ein elektrostatisches Beflockungsgerät,

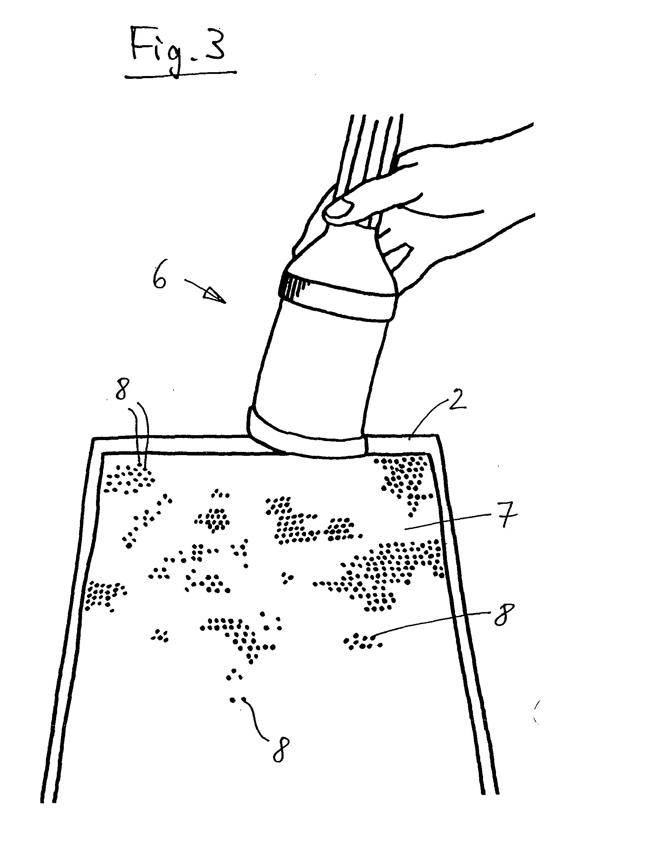

- Fig. 3: die Konfiguration gemäß Fig. 2 mit einer anderen Schablone,
- Fig. 4: die fertige Bepflanzungseinheit in einer Ansicht von oben und
- Fig. 5: einen Querschnitt der Bepflanzungseinheit gemäß Fig. 4.

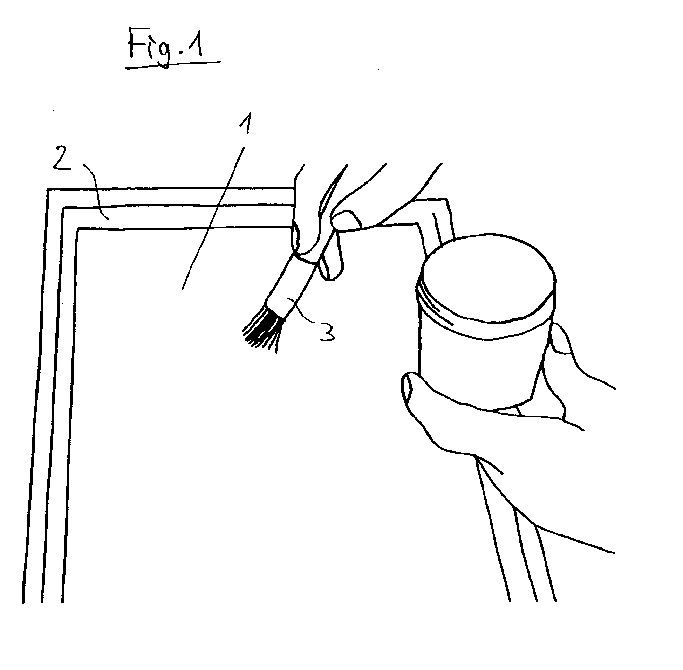

Zur Herstellung einer künstlichen Bepflanzungseinheit für eine Modelllandschaft, nämlich einer künstlichen Grasfläche, wird, wie in Fig. 1 dargestellt, eine Grundfläche, die sich innerhalb eines Rahmens 2 befindet, mittels eines Pinsels 3 mit Klebstoff bestrichen, wodurch eine Klebeschicht 1 ausgebildet wird.

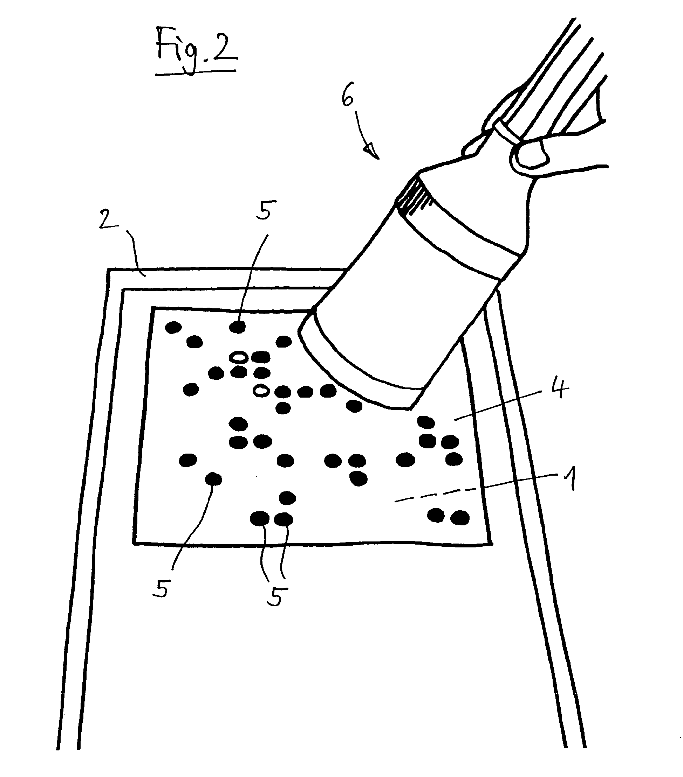

Danach wird, wie in Fig. 2 gezeigt, eine Schablone 4 über der Klebefläche 1 befestigt. Die Schablone 4 weist eine Vielzahl von Öffnungen 5 auf, die unregelmäßig über ihre Fläche verteilt sind.

Mittels eines elektrostatischen Beflockungsgeräts 6 werden Kunstgrasfasern auf verschiedene Bereiche der Klebeschicht 1 aufgebracht, und zwar auf diejenigen Bereiche, die von den Öffnungen 5 der Schablone 4 freigelassen werden. Ein Beispiel für ein elektrostatisches Beflockunggerät ist in der DE 20 2005 000 139 U1 beschrieben. Das Beflockungsgerät 6 dient zum Aufbringen der Kunstgrasfasern auf der Klebeschicht 1. Die Kunstgrasfasern werden von dem elektrostatischen Beflockungsgerät 6 vor dem Aufbringen auf der Klebeschicht 1 mittels Hochspannung elektrostatisch aufgeladen. Sie haften nach dem Aufbringen aufrecht auf der Klebeschicht 1. In dem elektrostatischen Beflockungsgerät 6 befindet sich ein Behälter zur Aufnahme der Kunstgrasfasern, an dessen Boden eine Hochspannungselektrode angebracht ist. Der Gegenpol dazu befindet sich am Griffteil des Beflockungsgeräts. Er wird an die zu beflockende Fläche angeschlossen. Im Betrieb bildet sich dadurch zwischen der zu beflockenden Klebeschicht 1 und der Hochspannungselektrode ein elektrisches Feld aus. Die im Behälter befindlichen Fasern werden an der Hochspannungselektrode elektrostatisch aufgeladen, treten dann an einem Sieb aus, bewegen sich entlang der Feldlinien zur entgegengesetzt geladenen Oberfläche der Klebeschicht 1, haften dort an und richten sich senkrecht dazu in Feldlinienrichtung aus.

Danach wird die Schablone 4 entfernt und die weitere Schablone 7 an ihre Stelle gesetzt. In der Schablone 7 ist wiederum eine Vielzahl von Öffnungen 8 vorhanden, die ebenfalls unregelmäßig angeordnet sind, jedoch in einer anderen Anordnung als die Öffnungen der Schablone 5. Der Beflockungsvorgang kann jetzt wiederholt werden. Hierbei können Kunstgrasfasern mit einer anderen Länge und/oder Farbe verwendet werden.

Anschließend kann der Beflockungsvorgang mit einer oder mehreren weiteren Schablonen wiederholt werden (in der Zeichnung nicht dargestellt).

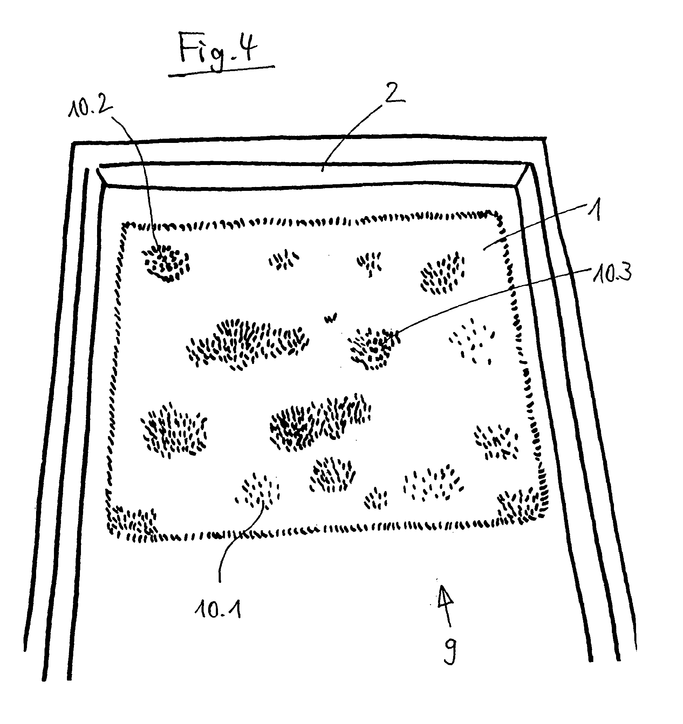

Fig. 4 zeigt die fertige künstliche Bepflanzungseinheit 9 in einer Ansicht von oben. Sie besteht aus der Klebeschicht 1 und verschiedenen Bereichen 10.1, 10.2, 10.3 usw., in denen jeweils Kunstgrasfasern mit einer bestimmten Länge und Farbe mit der Klebeschicht 1 verbunden sind. Durch die Ausbildung verschiedener Bereiche mit verschiedenen Kunstgrasfasern kann ein äußerst natürlich wirkendes Aussehen erzielt werden.

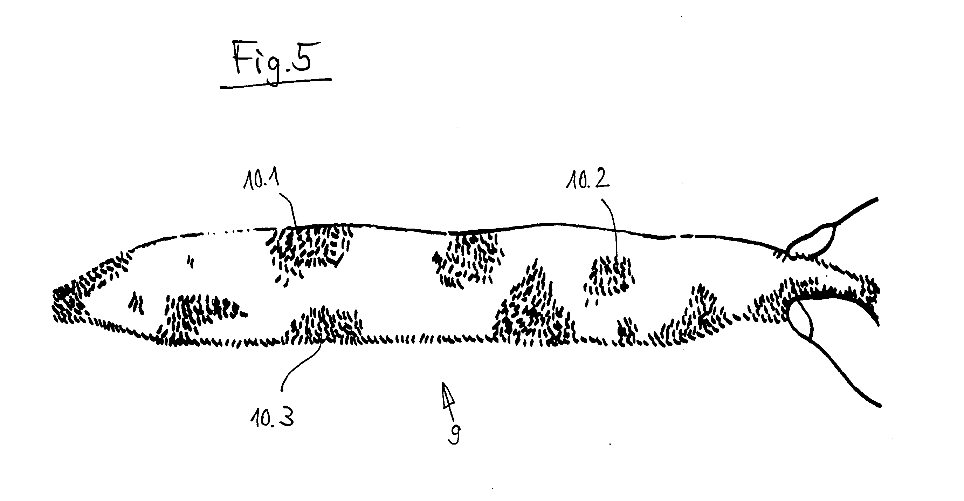

In Fig. 5 ist die künstliche Bepflanzungseinheit 9 in einem Querschnitt gezeigt. Die Trägerschicht ist flexibel und kann an verschiedene Landschaftsformen angepaßt werden.

Durch die Erfindung wird eine Modellbegrasung unregelmäßigen Bewuchses auf einer Ebene geschaffen, die vorgefertigt sein kann. Es ist möglich, daß die Modellbegrasung außer dem Kleber kein Trägermaterial aufweist. Die Modellbegrasung kann einfach und schnell auf die zu begrasende Fläche aufgebracht, insbesondere aufgeklebt werden.

Die Darstellung des unterschiedlichen Bewuchses auf der Bepflanzungseinheit kann durch Grasfasern mit unterschiedlichen Eigenschaften dargestellt werden, insbesondere durch Grasfasern mit unterschiedlichen Längen und/oder Farben. Um die unterschiedlichen Grasfasern gezielt auf der Fläche in einer Ebene plazieren zu können, können die unterschiedlichen Fasern auf die Klebeschicht bzw. Leimschicht in mehreren aufeinander folgenden Produktionsschritten aufgetragen werden. Dieser Prozeß erfolgt mittels Schablonen.

Zunächst wird eine Klebeschicht auf eine feste Unterlage aufgetragen. Danach befestigt man eine Schablone über der Klebefläche. Jetzt werden die ersten Sektionen beflockt. Hierbei handelt es sich um die Sektionen, die von den Löchern in der Schablone freigelassen werden. Danach wird die Schablone gewechselt, und es werden die nächsten Sektionen beflockt. Auf diese Weise wird fortgefahren, bis das gewünschte Ergebnis erzielt ist. Zum Schluß muß die Klebefläche gut trocknen. Danach kann man die Bepflanzungseinheit vom festen Untergrund abziehen und zur Dekoration verwenden.

Die Kunstgrasfasern können aus gefärbten Viskose-Fasern oder PA-Fasern von unterschiedlichen Längen und Querschnitten bestehen. Für die Klebefläche kann ein Spezialkleber verwendet werden. Durch die Kombination verschiedener Materialien und/oder Längen und/oder Farben und/oder Querschnitte sind viele Formen, Höhen und Größen des Bewuchses möglich. Insbesondere können Streifen, Büschel, Flächen und/oder Punkte erzeugt werden.

Durch die Erfindung wird es ermöglicht, daß jedermann ohne besondere Kenntnisse einen unregelmäßigen Bewuchs nachbilden kann. Es ist möglich, eine künstliche Bepflanzungseinheit für Modelllandschaften herzustellen, die eine Vielzahl von Bereichen verschieden langer Kunstgrasfasern auf einer Ebene, nebeneinander in dem Klebefilm verankert, umfaßt, wobei die Bereiche durch eine klebeförmige Verbindung mittels Schablonen sektional zusammengefügt sind. Die künstliche Bepflanzungseinheit kann aus verschiedenartigen Kunstgrasfasern, Flockmaterial und einer Klebefläche bestehen. Die Bepflanzungseinheit kann als ein Büschel, als Streifen, als Fläche oder als ein Punkt ausgeführt sein. Die klebeförmige Verbindung ist vorzugsweise zumindest teilweise elektrostatisch gefügt. Die künstliche Bepflanzung kann zusätzlich an den Spitzen mit Flockmaterial beflockt werden zur Nachbildung von Wiesenblumen, Wiesenstauden, Gartenstauden, Blumenrabatten, Bodendeckern.

## Patentansprüche

1. Verfahren zum Herstellen einer künstlichen Bepflanzungseinheit (9) für eine Modelllandschaft,
**dadurch gekennzeichnet,**
**daß** Kunstgrasfasern auf verschiedene Bereiche einer Klebeschicht (1) aufgebracht werden.

2. Verfahren nach Anspruch 1, **dadurch gekennzeichnet, daß** auf weitere Bereiche der Klebeschicht (1) weitere Kunstgrasfasern aufgebracht werden.

3. Verfahren nach Anspruch 1 oder 2, **dadurch gekennzeichnet, daß** die Kunstgrasfasern mittels einer oder mehrerer Schablonen (4, 7) auf die verschiedenen Bereiche der Klebeschicht (1) aufgebracht werden.

4. Verfahren nach einem der vorhergehenden Ansprüche, **dadurch gekennzeichnet, daß** die Kunstgrasfasern vorzugsweise bereichsweise an ihren Spitzen mit Flockmaterial beflockt werden.

5. Verfahren nach einem der vorhergehenden Ansprüche, **dadurch gekennzeichnet, daß** die Kunstgrasfasern und/oder das Flockmaterial elektrostatisch (6) aufgebracht werden.

6. Verfahren nach einem der vorhergehenden Ansprüche, **dadurch gekennzeichnet, daß** die Kunstgrasfasern in Form von Büscheln, Streifen, Flächen und/oder Punkten auf die Klebeschicht (1) aufgebracht werden.

7. Verfahren nach einem der vorhergehenden Ansprüche, **dadurch gekennzeichnet, daß** die aus der Klebeschicht (1) und den damit verbundenen Kunstgrasfasern bestehende Einheit (9) von der Unterlage abgelöst wird.

8. Künstliche Bepflanzungseinheit (9) für eine Modelllandschaft, umfassend eine Trägerschicht und darauf aufgebrachte Kunstgrasfasern, wobei verschiedene Kunstgrasfasern auf verschiedene Bereiche (10.1, 10.2, 10.3) der Trägerschicht aufgebracht sind.

9. Künstliche Bepflanzungseinheit nach Anspruch 8, **dadurch gekennzeichnet, daß** die Spitzen der Kunstgrasfasern vorzugsweise bereichsweise mit Flockmaterial beflockt sind.

10. Künstliche Bepflanzungseinheit nach Anspruch 8 oder 9, **dadurch gekennzeichnet, daß** die Kunstgrasfasern und/oder das Flockmaterial elektrostatisch (6) aufgebracht sind.

11. Künstliche Bepflanzungseinheit nach einem der Ansprüche 8 bis 10, **dadurch gekennzeichnet, daß** die Kunstgrasfasern in Form von Büscheln, Streifen, Flächen und/oder Punkten auf die Trägerschicht aufgebracht sind.

12. Künstliche Bepflanzungseinheit nach einem der Ansprüche 8 bis 11, **dadurch gekennzeichnet, daß** die Trägerschicht eine Klebeschicht (1) aufweist oder aus einer Klebeschicht (1) besteht.
